# DEMANDE DE BREVET EUROPEEN

(11) **EP 1 821 098 A1**
(43) Date de publication de la demande: **22.08.2007**
(21) Numéro de dépôt: 06110012.9
(22) Date de dépôt: 16.02.2006
(51) Int. Cl.: G01N 27/22, B60S 1/08

(54) **Vitrage avec détecteur de pluie capacitif**

(71) Demandeur: GLAVERBEL, 1170 Bruxelles (BE)
(72) Inventeur: Delatte Yves, 6040 Jumet (BE)
(74) Mandataire: Le Vaguerèse, Sylvain Jacques

(57) **Abrégé**

La présente invention concerne des vitrages automobiles munis de détecteur de pluie capacitifs

Les vitrages selon l'invention sont feuilletés et sont pourvus d'un détecteur de pluie capacitif situé entre les feuilles constituant le vitrage. Le détecteur comprend des électrodes formant capacité constituées d'un matériau conducteur de faible épaisseur, essentiellement transparent à ces épaisseurs. Les électrodes sont alimentées par un circuit induit, associé à un circuit inducteur disposé sur une face extérieure du vitrage.

## Description

La présente invention concerne les vitrages comportant un détecteur de pluie, et notamment ceux utilisés sur les véhicules automobiles.

L'utilisation de détecteurs de la présence d'eau sur un vitrage, par exemple pour commander une opération telle que la mise en marche d'essuie-glace pour les véhicules automobiles est usuelle. Dans cette application les détecteurs commercialisés sont du type utilisant l'altération d'un signal lumineux sur le trajet duquel se situent les gouttes d'eau à détecter. Le détecteur comprend un émetteur et un récepteur du signal lumineux constitué par exemple d'un rayon réfléchi.

Les détecteurs fonctionnant sur ces signaux optiques, lorsqu'ils sont utilisés notamment sur des vitrages automobiles, ont l'inconvénient de conduire à la présence sur le vitrage d'éléments non-transparents. Même miniaturisés, le détecteur recouvre une dizaine de centimètres carrés. Pour minimiser la gêne sur les pare-brise, le détecteur est habituellement dissimulé derrière le rétroviseur intérieur. Dans cette disposition, la présence du détecteur sur le pare-brise reste inesthétique, au moins vu de l'extérieur.

Un autre type de détecteur a été proposé antérieurement, qui met en oeuvre un dispositif dans lequel le signal est généré par une variation de capacité. Un ensemble d'électrodes est disposé sur le vitrage. La présence d'eau sur le vitrage, eau qui présente une constante diélectrique très différente de celle de l'air ou du verre, modifie de façon significative la capacité du système d'électrodes. Cette variation constitue le signal généré par le détecteur.

Les détecteurs capacitifs proposés antérieurement présentent des constructions variées. Initialement les électrodes étaient directement sur la face du vitrage exposée à la pluie. Cette disposition si elle est très sensible, n'est pas en pratique utilisable les électrodes se trouvant soumises à l'action abrasive du balayage des essuie-glace. Le détecteur en effet est nécessairement disposé dans la zone balayée de telle sorte que le signal soit modifié dès que l'apport d'eau sur le virage cesse ou évolue.

D'autres dispositions ont été proposées, dans lesquelles les électrodes sont situées sur la face du vitrage non-exposée à la pluie. Dans ces modes de réalisation les détecteurs présentent habituellement une sensibilité insuffisante. Ils ont en plus l'inconvénient de générer des signaux erronés lorsque le vitrage est l'objet de la formation de buée sur la face portant le capteur.

Pour répondre aux limites ou inconvénients indiqués ci-dessus, il a été aussi envisagé de disposer les électrodes entre les feuilles de verre dans les vitrages feuilletés en utilisant pour constituer ces électrodes, une couche conductrice revêtant ce vitrage et destinée notamment à réduire la transmission des rayonnements infrarouges. On sait que les couches ayant cette propriété sont des couches conductrices qu'elles soient formées d'oxydes conducteurs comme l'ITO ("indium-tin oxide") ou, plus fréquemment d'un ensemble de couches dont celle réfléchissant les infrarouges est une couche métallique mince, le plus souvent d'argent.

L'avantage des couches en question est qu'elles conservent une transmission très importante du spectre lumineux visible. Typiquement les vitrages feuilletés comportant ces couches offrent comme la réglementation l'impose pour les pare-brise automobiles, une transmission lumineuse qui n'est pas inférieure à 75%.

La formation des électrodes des détecteurs constitués dans ces couches conductrices, est obtenue essentiellement en séparant les plages conductrices du reste de la couche revêtant le vitrage par exemple par l'ablation localisée de la couche suivant un dessin correspondant à la forme des électrodes.

Pour tous les détecteurs capacitifs dont il est question précédemment une contrainte réside dans la nécessité de relier les électrodes à un dispositif d'analyse, et plus encore à une alimentation électrique. Si l'analyse peut être conduite dans un circuit intégré de dimensions extrêmement réduites pouvant s'insérer sans difficultés dans le vitrage feuilleté, l'alimentation de l'ensemble est nécessairement extérieure au vitrage. Les électrodes sont alimentées au moyen de conducteurs qui pénètrent entre les feuilles du vitrage feuilleté. Ceci nécessite des connexions qui présentent toujours un risque d'introduire des défauts à l'endroit de pénétration des conducteurs. Les connexions de ce type sont en général par ailleurs relativement fragiles.

Pour éviter ces connexions il a été proposé de former le détecteur capacitif au moyen de fils lesquels constituent d'une part les électrodes de détection et d'autre part un circuit d'induction, l'ensemble étant disposé entre les feuilles d'un vitrage feuilleté. Un circuit inducteur est disposé, face au circuit d'induit, sur une face extérieure du vitrage.

Cette disposition impose la présence des fils dans le champ de vision, fils qui doivent nécessairement présenter une certaine longueur et une section suffisante pour conduire à une capacité permettant une discrimination satisfaisante entre les signaux parasites formant bruit de fond et les variations de capacité liées à la présence des gouttes de pluie. En pratique les fils constituants cette capacité doivent s'étendre sur quelques dizaines de centimètres. La section des fils ne doit pas être trop importante dans la mesure où ils sont dans le champ visuel. Même si ils ne perturbent pas celui-ci, les fils sont aussi fins qu'il est possible pour des raisons d'esthétique. Par ailleurs ils ne doivent pas présenter une résistance pas trop élevée qui aurait pour conséquence de produire un courant induit insuffisant pour alimenter la capacité.

Les inventeurs proposent d'offrir des détecteurs de pluie capacitifs dont les électrodes sont essentiellement transparentes, qui soient compatibles avec tous les vitrages feuilletés qu'ils comportent ou non une couche limitant la transmission des rayons infrarouges. Les inventeurs proposent aussi que ces détecteurs soient alimentés en évitant de les relier au moyen de conducteurs connectés directement au circuit électrique du véhicule.

Selon l'invention les vitrages sont constitués d'un ensemble de deux feuilles rigides. Les feuilles rigides sont de préférence en verre minéral. Elles peuvent aussi être constituées d'un verre dit "organique" usuel comme les feuilles de poly-carbonates fréquemment utilisées pour constituer des vitrages de véhicules. Dans la suite par mesure de simplification la description est faite en se référant aux feuilles de verre. L'invention s'applique cependant aux vitrages comportant ces verres organiques.

Les deux feuilles rigides sont réunies au moyen d'au moins une feuille intercalaire en matériau synthétique thermoplastique tel que le polyvinyl-butyral (PVB), une résine d'éthylène vinyle acétate (EVA) ou tout intercalaire traditionnel pour ce type d'assemblage.

Dans les vitrages selon l'invention le détecteur capacitif est situé entre les feuilles de verre.

Le détecteur selon l'invention peut aussi être utilisé dans les vitrages dits "bilayer" qui comportent une feuille de verre associée à une feuille d'un matériau plastique, notamment de polyuréthane, matériau qui offre simultanément la plasticité assurant la résistance contre l'éviction des passagers en cas d'accident, et une qualité de surface suffisante pour résister aux rayures. Dans ce cas le détecteur capacitif selon l'invention est situé entre la feuille de verre et la feuille de matériau plastique.

Dans la suite de la description par mesure de simplification, l'invention est présentée dans le cadre de vitrages feuilletés comprenant deux feuilles de verre.

Les électrodes du détecteur selon l'invention sont constituées d'un matériau de faible épaisseur, essentiellement transparent, de sorte que la transmission lumineuse dans le domaine du visible dans la zone couverte par ces électrodes ne soit pas inférieure à 60% et de préférence pas inférieure à 65%.

La surface conductrice peut être essentiellement formée par la surface des électrodes et éventuellement des éléments conducteurs reliant ces électrodes au dispositif d'alimentation et d'analyse des variations de capacité. Les électrodes sont de dimensions et de configuration telles qu'elles développent des capacités suffisantes pour présenter une sensibilité adéquate aux modifications liées à la présence des gouttes d'eau.

Les conducteurs transparents reliant les électrodes au circuit induit doivent être aussi peu sensibles que possible aux variations mesurées. Autrement dit leur capacité doit être aussi faible que possible. Ils présentent de ce fait une surface relativement faible par rapport à celles des électrodes. Leur surface doit cependant être suffisante pour que leur résistance ne soit pas trop élevée.

La surface conductrice peut aussi s'étendre au-delà des éléments formant le capteur proprement dit. C'est le cas en particulier lorsque les électrodes sont formées par ablation de matériau conducteur à partir d'une surface uniformément revêtue comme il sera détaillé plus loin. C'est le cas tout particulièrement lorsque le détecteur est formé dans une couche conductrice ayant par ailleurs une fonction distincte notamment, une couche chauffante, et/ou filtrant les rayons infrarouges.

En l'absence d'une couche revêtant l'ensemble du vitrage, la surface sur laquelle le matériau conducteur s'étend, est en conséquence essentiellement celle des électrodes constituant la capacité. En pratique dans ce cas la surface des électrodes représente de préférence moins de 10% la surface conductrice du vitrage. Il va de soi que ces pourcentages sont fonction de l'étendue des surfaces avoisinant le capteur dont il est question ci-dessus. Ces surfaces peuvent être modulées à volonté sans pour autant sortir du cadre de l'invention. Pour les raisons indiquées, en dehors d'un revêtement de l'ensemble du vitrage leur extension ne présente pas d'utilité pratique, aussi sont-elles normalement limitées, leur étendue dépendant principalement de la commodité de fabrication du détecteur.

Le choix d'électrodes essentiellement transparentes répond à la nécessité de disposer d'un détecteur qui ne nuise pas à l'aspect général du vitrage contrairement à ceux actuellement dans le commerce ou aux détecteurs capacitifs constitués de fils et alimentés par un circuit induit qui font l'objet de propositions plus récentes.

Les dimensions propres des électrodes des détecteurs selon l'invention, font qu'une petite partie seulement de la surface du vitrage, tel un pare-brise, supporte le détecteur. Pour un pare-brise la surface concernée pour garantir une bonne sensibilité est de l'ordre de 0,01 à 0,005m². En pratique la surface couverte par les électrodes est avantageusement comprise entre 0,0004 et 0,04m². Cette surface limitée, et le caractère transparent font que la présence du détecteur est relativement discrète et ne perturbe en rien le champ visuel, d'autant qu'il peut avantageusement se situer, comme pour les détecteurs optiques, derrière le rétroviseur intérieur. La seule obligation est que la partie constituant la capacité se situe dans une zone balayée par les essuie-glace.

La limitation de la surface des électrodes permet la mise en oeuvre de tels dispositifs même sur des vitrages ne comportant pas de couches conductrices destinées à faire obstacle à la transmission des rayonnements infrarouges. La réalisation en est facilitée. En effet même dans le cas où les électrodes du détecteur seraient formées d'une ou plusieurs couches conductrices du type de celles utilisées pour constituer ces vitrages à faible transmission dans l'infrarouge leur réalisation est moins contraignante en raison du fait que d'une part la surface étant plus petite la production en est simplifiée, et, d'autre part la qualité, notamment l'absence totale de défauts ponctuels de cette couche qui constitue une des grandes difficultés de leur production, n'est pas une condition impérative pour le bon fonctionnement du détecteur. Bien entendu, il reste préférable pour ces électrodes de disposer de couches pratiquement sans défaut.

Si par ailleurs la constitution de détecteurs comportant une couche transparente de dimension limitée représente une part significative de ceux réalisables selon l'invention, leur production sur des vitrages qui comporte une couche qui s'étend sur l'ensemble du vitrage est également considérée selon l'invention. La difficulté de réaliser ces couches, comme indiqué précédemment, n'est pas liée à la formation du capteur. Dans la mesure où l'on dispose donc de tels vitrages revêtus uniformément, la formation du capteur par une découpe selon le motif approprié ne soulève pas de difficulté supplémentaire par rapport à celles rencontrées pour les détecteurs formés dans une couche de dimension limitée.

Dans la production des détecteurs capacitifs selon l'invention comprenant une couche ou ensemble de couches conductrices, les techniques mise en oeuvre pour la formation d'un filtre infrarouge sont applicables. Pour les couches de type oxyde conducteur tel que l'ITO, SnO₂ dopé, oxydes de vanadium, la formation est avantageusement faite par une technique de pyrolyse. Pour les ensembles de couches comportant une couche conductrice métallique, notamment d'argent, la formation est obtenue de préférence par des techniques sous vide, comme la pulvérisation avec magnétron.

Dans la production des vitrages comportant une couche conductrice l'obtention d'une bonne uniformité sur toute la surface conduit à procéder au dépôt sur des feuilles de verre planes, donc avant les opérations de formage. Ces opérations de formage, essentiellement de bombage et de trempe impliquent des traitements thermiques relativement vigoureux qui peuvent altérer ces couches, en particulier les couches métalliques. Dans le cas d'une application qui ne concerne qu'une petite surface du vitrage la mise en oeuvre peut se faire soit avant soit après formage. Dans les deux cas l'opération comporte moins de risques d'aboutir à des produits défectueux. Pour l'application avant bombage, la dimension limitée de la surface conductrice réduit considérablement les inhomogénéités des conditions thermiques qui peuvent concerner la surface du vitrage. Pour l'application après bombage les dimensions du détecteur sont suffisamment petites pour que la surface concernée apparaisse pratiquement comme plane. Il en résulte que si certaines techniques d'application, notamment le dépôt sous vide, ne peuvent être utilisées pour revêtir un vitrage entier préalablement bombé, il n'en est pas de même pour la constitution de la couche utilisée pour constituer un détecteur.

Les matériaux constituant les électrodes répondent tous aux conditions requises de conductivité et de transparence aux épaisseurs utilisées. La conductivité est un facteur significatif. La détection dans les techniques préférées, est effectuée en mettant en oeuvre des fréquences relativement élevées (plusieurs dizaines de kilohertz). A ces fréquences, les matériaux doivent être suffisamment conducteurs pour que les charges électriques, et les champs qu'elles génèrent soient suffisamment intenses. Les couches métalliques, argent, aluminium, cuivre, or, platine notamment sont utilisables. Comme indiqué précédemment les oxydes conducteurs constituent également un groupe de matériaux commodément utilisables. On peut aussi utiliser des vernis ou encres conducteurs ou encore des polymères conducteurs comme les poly-éthylène dioxythiophène (commercialisés sous le nom de "Pedot") ou les poly-anilines (commercialisés notamment par la société Panipol Oy).

L'application de couches sur une partie seulement ou sur la totalité d'un vitrage, s'effectue par les moyens traditionnels. Il s'agit des techniques telles que la pyrolyse de poudres ou de gaz, particulièrement pour la constitution de couches d'oxydes conducteurs. Il s'agit aussi des techniques de dépôt dites "sous-vide" comme les techniques de pulvérisation cathodique au moyen de magnétrons, ceci particulièrement pour les dépôts d'ensembles de couches dont une couche métallique. Il s'agit aussi des applications de compositions conductrices au moyen de pochoirs ou par sérigraphie. L'impression du motif constituant les électrodes peut aussi être obtenue par projection du type "jet d'encre".

Soit l'application du matériau conducteur reproduit directement le motif du détecteur, soit ce motif est obtenu à partir d'une surface uniformément recouverte, par ablation localisée suivant le motif recherché, soit encore la conductivité du matériau est activée suivant le motif en question. Au premier mode correspondent notamment le masquage, l'impression par sérigraphie, au pochoir ou impression par jet d'encre, les décalcomanies ou impression transfert... Au second mode correspondent habituellement les techniques de pulvérisation sous vide ou de dépôts pyrolytiques (CVD, LPCVD). Au troisième mode correspond par exemple la transformation de polymères rendus localement conducteurs.

L'enlèvement localisé des couches préalablement appliquées, compte tenu de la petitesse des motifs, notamment les intervalles séparant des zones conductrices de zones qui ne le sont pas, parfois de l'ordre du millimètre ou moins, peut être préférable aux techniques de masquage. Dans ce cas, on procède à une application uniforme de la surface du détecteur, éventuellement suivant un contour correspondant à la périphérie de ce détecteur, et ensuite à la délimitation des électrodes les unes par rapport aux autres, de même qu'au dessin des conducteurs, par ablation localisée des couches préalablement déposées selon le dessin approprié. Le mode le plus usuel pour ce type d'ablation très précise, est l'utilisation d'un faisceau laser, mais une ablation mécanique ou chimique est également envisageable.

Dans tous les cas, les caractéristiques de l'ablation sont choisies de façon que localement la couche conductrice soit complètement éliminée, délimitant ainsi des zones électriquement isolées les unes des autres, sans aller jusqu'à attaquer le substrat verrier.

Si, comme indiqué ci-dessus, le capteur peut être constitué de couches disposées sur une des feuilles de verre du vitrage feuilleté, il peut être encore plus commode de disposer les électrodes sur une feuille "support" insérée entre les feuilles de verre.

L'introduction d'une feuille souple comportant une couche réfléchissant sélectivement les infrarouges est une alternative connue au dépôt de couches directement sur les feuilles de verreLes feuilles introduites peuvent être de nature variée. Il s'agit par exemple de polypropylène, de polyéthylène haute ou basse densité, mais surtout de polytéréphtalate d'éthylène glycol (PET).

Pour éviter que les couches soient distendues lors du formage, entraînant des propriétés non uniformes sur toute la surface, l'utilisation la plus usuelle consiste à prendre comme support de ces couches des films relativement peu extensibles. Des films préférés sont constitués de polytéréphtalate d'éthylène glycol (PET). Ces films présentent une grande résistance mécanique, ce qui permet de les utiliser à des épaisseurs extrêmement faibles de l'ordre de quelques dizaines de microns. Ces faibles épaisseurs favorisent une transmission lumineuse visible très importante. Autrement dit, la présence de ce film supplémentaire n'occasionne pas de diminution sensible de la transmission lumineuse du vitrage dans lequel ce film réfléchissant les infrarouges est introduit sur ce support.

De manière particulière le film inséré dans le vitrage feuilleté peut être conducteur par lui-même sans qu'il soit nécessaire de lui appliquer une couche conductrice supplémentaire. Des produits de ce type sont par exemple des produits commercialisés sous le nom polyoléfine prémix Préélec TP 9815.

La disposition consistant en la formation des électrodes du détecteur sur un support qui est ensuite introduit entre les deux feuilles de verre est particulièrement avantageuse lorsque le support est de petites dimensions par rapport au vitrage.

La commodité de formation des électrodes sur un élément rapporté est certaine. La qualité du support n'est pas tributaire des conditions notamment thermiques des opérations effectuées précédemment sur les feuilles de verre du vitrage. La seule contrainte est de pouvoir supporter les conditions qui sont celles de la formation du feuilleté. Mais à ce stade les conditions notamment thermiques imposées sont beaucoup moins contraignantes. A titre indicatif si le formage du verre impose des températures de l'ordre 600 à 650°C, l'assemblage d'un vitrage feuilleté au moyen d'un intercalaire se fait à l'étuve à des températures qui ne dépassent pas normalement 150°C.

Avantageusement selon l'invention le circuit conducteur constituant le détecteur est donc disposé sur un support introduit dans le feuilleté

L'introduction dans le vitrage est avantageusement effectuée au cours de l'opération de feuilletage. L'élément formant le capteur est inséré par exemple entre une feuille de verre et la feuille intercalaire d'assemblage, typiquement de PVB. Le cas échéant si l'élément formant le capteur est supporté par un matériau qui n'adhère pas au verre, il est possible de le disposer entre deux feuilles intercalaires. Il est aussi possible de disposer un adhésif sur la face de l'élément au contact de la feuille de verre. De manière connue cet adhésif peut être constitué d'une poudre de PVB appliquée entre le verre et la feuille supportant les couches conductrices. L'adhésif peut aussi être constitué de manière connue sous forme d'un film appliqué à partir d'un ruban support lequel est retiré laissant uniquement le film adhésif. Ce type de produit est notamment de ceux commercialisés par la société Mactac.

Les éléments conducteurs constituant les électrodes du détecteur doivent offrir une certaine capacité pour que la modification de la constante diélectrique liée à la présence d'eau sur le vitrage introduise une variation sensible de cette capacité. Pour cette raison les électrodes doivent offrir une certaine surface compte tenu de ce que par ailleurs les épaisseurs des couches conductrices sont nécessairement très faibles. Si la distance entre les électrodes est faible pour favoriser l'intensité des champs électriques, il est nécessaire cependant d'une part que la distance soit suffisante pour prévenir un risque de court-circuit en raison d'une éventuelle configuration insuffisamment précise. Il faut surtout que la surface située entre les électrodes soit suffisante pour que la présence des gouttes d'eau sur le vitrage soit détectée dès l'apparition de ces gouttes indépendamment du fait que la distribution de ces gouttes est nécessairement aléatoire. Dans ce sens l'accroissement de la surface "sensible" à la présence des gouttes d'eau accroît la probabilité de trouver les gouttes dès leur apparition.

Le détecteur doit être très peu épais pour la raison qu'il est préférable d'avoir des électrodes quasi-transparentes, et que si leur épaisseur s'accroît trop elles perdent nécessairement cette qualité. L'épaisseur de la couche est, bien entendu, fonction de la nature des matériaux qui la constituent.

Pour les ensembles comportant une couche métallique du type de celles déposées par pulvérisation sous-vide les épaisseurs sont avantageusement comprises entre 25 et 200Å et de préférence entre 50 et 150Å.

Pour l'obtention d'une conductivité élevée sous l'épaisseur la plus faible possible, les électrodes sont avantageusement constituées d'une couche d'argent de 60 à 140Å d'épaisseur, disposée entre des couches d'oxyde protégeant l'argent et permettant d'atteindre une bonne neutralité de couleur en réflexion notamment.

Pour les couches à base d'oxyde conducteur, notamment ITO ou SnO₂ dopé, l'épaisseur est sensiblement plus importante, de l'ordre de 50 à 1000nm et le plus fréquemment de 100 à 500nm.

Pour les couches déposées par les techniques d'impression les épaisseurs peuvent être encore plus importantes. Elles se situent par exemple entre 1 et 50µ, et de préférence entre 5 et 20µ.

Les détecteurs de pluie selon l'invention associent les électrodes constituées d'une couche transparente conductrice telle que décrite ci-dessus, à un circuit induit qui alimente ces électrodes. Le circuit induit peut le cas échéant être constitué de la même façon que les électrodes dans la couche conductrice transparente. Le plus souvent cependant pour l'obtention d'une inductance suffisante pour alimenter les capacités sans accroître les dimensions du circuit induit de manière excessive, ce dernier est de préférence constitué sous forme d'un fil formant de multiples spires.

La présence du fil constituant le circuit induit, contrairement aux propositions antérieures ne nuit pas à l'esthétique de l'ensemble. Les spires peuvent tenir sur une très faible surface (quelques centimètres carrés) et de ce fait peuvent facilement se loger dans une zone du vitrage supportant déjà des éléments non transparents. Pour les pare-brise il s'agit notamment de la zone de fixation du rétroviseur intérieur.

L'utilisation d'un circuit induit constitué d'un fil métallique conducteur nécessite de relier ce circuit à celui des électrodes transparentes. Cette jonction est réalisée au moyen soit de colles conductrices, soit par soudure, éventuellement activée par ultrasons, soit encore par simple contact entre les extrémités respectives du fil constituant le circuit induit d'une part, et celles des électrodes du capteur.

Lorsque le circuit induit est formé dans la couche constituant également les électrodes, le circuit induit qui est sous forme d'une bande étroite délimitée dans cette couche sous forme d'une spirale, comprend également un fil conducteur de jonction reliant l'extrémité au centre de la spirale à une des branches conductrice reliée à l'une des électrodes. Dans cette configuration il est nécessaire de faire ne sorte que ce fil de jonction qui s'étend nécessairement sur les spires du circuit induit soit revêtu d'une gaine isolante, sauf à ses extrémités.

S'il est possible de former le détecteur selon l'invention en constituant les électrodes par dépôt d'une couche conductrice sur une feuille de verre et d'y associer un circuit induit rapporté, il est avantageux selon l'invention de procéder à la formation du capteur, électrodes et circuit induit, sur une feuille qui est insérée dans le vitrage feuilleté comme décrit précédemment. La mise en place du circuit induit par rapport à celui des électrodes, et la jonction de ces deux éléments conducteurs est plus aisée sur cette feuille rapportée.

L'insertion ultérieure de l'ensemble détecteur au moment du feuilletage du vitrage ne nécessite pas de précautions particulières autres que celles liées à toute introduction d'un insert dans le feuilletage quelle que soit sa fonction. Le plus important est de faire en sorte que la présence de cet insert particulier ne crée pas de risque d'apparition de délamination ou encore de la présence de bulles.

L'invention est décrite de manière détaillée dans la suite en faisant référence aux figures dans lesquelles :
- la figure 1 est une représentation schématique en perspective du principe de mise en oeuvre d'un détecteur de pluie selon l'invention sur un pare-brise automobile;
- la figure 2 est une coupe selon A-A d'une partie de la figure 1 à échelle différente;
- les figures 3a 3b et 3c présentent en coupe d'autres modes de réalisation selon l'invention, ;
- la figure 4 illustre en "éclaté" l'assemblage des éléments du type présenté à la figure 3a;
- la figure 5 montre schématiquement un mode r de réalisation d'un détecteur selon l'invention avec son circuit induit;
- la figure 6 est analogue à la précédente, et présente un dessin d'électrodes différent;
- la figure 7 présente de façon schématique en coupe la disposition d'un détecteur tel que mis en oeuvre dans un vitrage selon l'invention.

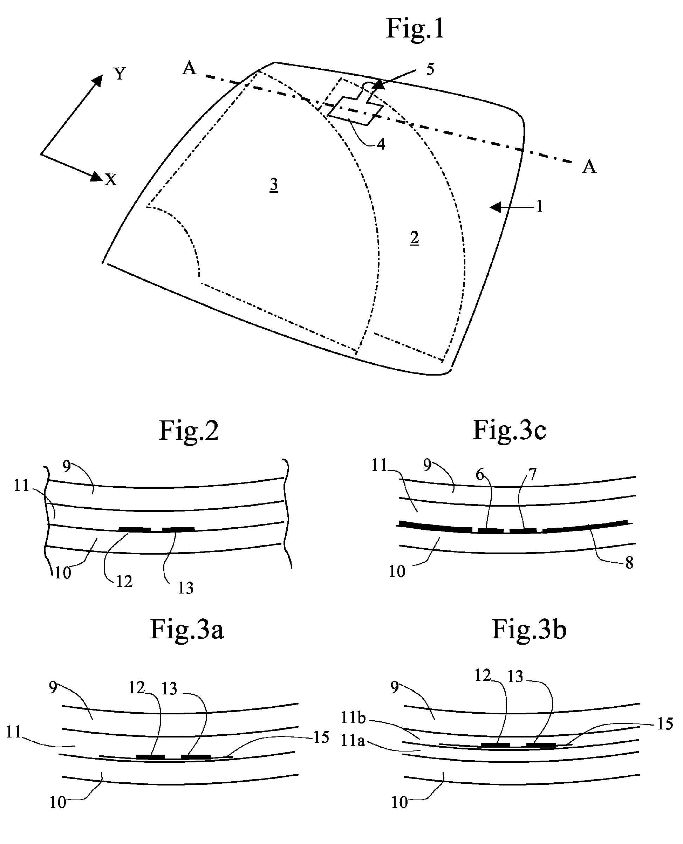

La figure 1 présente schématiquement la disposition typique d'un détecteur de pluie sur un pare-brise automobile (1). Le pare-brise comporte des courbures composées, dans la largeur (direction X) et dans la hauteur (direction Y), forme usuelle dans les modèles actuels.

Sur le pare-brise le détecteur de pluie (4) est nécessairement situé dans une zone (2, 3) balayée par les essuie-glace. Sur la figure ces zones sont schématisées par les traits discontinus. Cette disposition est commandée par le fait que le détecteur (4) est destiné à déclencher le mouvement des essuie-glace en présence d'eau sur les zones balayées. En dehors de ces zones, l'eau peut demeurer après que l'apport de pluie a cessé. En conséquence si le détecteur était disposé hors des zones balayées, le mouvement des essuie-glace pourrait être maintenu sans nécessité.

Le détecteur (4) pour les systèmes optiques qui comportent des éléments non-transparents, est de préférence disposé en un point où il ne cause aucune gêne pour le conducteur. Si néanmoins il est encore dans le champ visuel, de préférence cet emplacement est déjà occulté par un autre élément fonctionnel. Très habituellement les détecteurs optiques sont disposés derrière le rétroviseur intérieur.

Dans le cas des détecteurs capacitifs utilisés selon l'invention, le fait que les électrodes soient très largement transparentes au rayonnement visible offre une plus grande latitude dans le choix de cet emplacement, même si la surface occupée est sensiblement plus importante que celle masquée par les détecteurs optiques traditionnels.

Pour les détecteurs selon l'invention, hors les électrodes formant capacité, le circuit induit (5) est disposé avantageusement dans une partie du vitrage qui ne correspond pas au champ visuel ou dans un emplacement où une partie de ce champ est déjà occultée. Il s'agit par exemple de l'emplacement de l'embase du rétroviseur intérieur ou encore de la zone masquée par un bandeau d'émail opaque situé à la périphérie du vitrage.

Sur la figure 1 le système inducteur qui alimente le système induit (5) et qui comprend le circuit d'analyse en retour des variations d'inductance engendrées elles mêmes par les variations de capacité liées à la présence de gouttes de pluie dans le champ électrique des électrodes, n'est pas représenté.

Les conducteurs reliant les électrodes au circuit induit (5) sont inévitablement le siège de signaux parasites. Pour minimiser cet effet parasite, il est souhaitable de raccourcir le plus possible ces conducteurs. Pour cette raison le détecteur est normalement à proximité du circuit induit, lui-même situé près du bord du vitrage.

Les détecteurs capacitifs transparents peuvent être ménagés dans une couche conductrice dont le rôle principal est de faire obstacle, au moins en partie, à la transmission des infrarouges. Une telle couche s'étend bien évidemment sur la quasi-totalité de la surface du vitrage. Dans ce cas le détecteur est formé par découpe de cette couche suivant le motif choisi.

La coupe schématique de la figure 2 montre une disposition des électrodes dans un vitrage feuilleté selon l'invention. Le vitrage comporte deux feuilles de verre (9,10). Les feuilles de verre sont assemblées de manière traditionnelle au moyen d'une feuille intercalaire thermoplastique(11), par exemple de type PVB. Les électrodes (12, 13) sont formées indépendamment d'une couche de revêtement filtrant les infrarouges, directement sur la face d'une des feuilles de verre. Il est avantageux de situer les électrodes sur la face la plus proche des gouttes de pluie pour que les variations de champ électrique soient les plus intenses possibles, permettant d'obtenir une bonne sensibilité.

Sur la figure 2 les électrodes sont représentées sans respecter l'échelle effective pour la commodité de compréhension. En particulier les dimensions des électrodes et les distances entre celles-ci sont volontairement forcées. En pratique les distances entre les électrodes sont relativement réduites, habituellement de l'ordre de 0,5 à 5 millimètres afin de maximiser le champ électrique. Comme indiqué précédemment cependant, il s'agit d'établir un compromis entre un champ suffisamment intense, et une surface suffisante pour recouvrir une variation de champ bien représentative du phénomène détecté.

Dans le mode de réalisation illustré à la figure 2 les électrodes sont par exemple formées par dépôt d'une couche conductrice limitée à l'étendue de ces électrodes. Cette opération peut être conduite sur la feuille préalablement formée pour éviter tout risque d'altération. Le fait que la feuille ne soit pas plane à ce stade du processus, n'occasionne pas de difficulté particulière d'application dans la mesure où la surface concernée est de dimensions limitées de telle sorte que les variations des conditions de dépôt sur cette surface réduite ne sont pratiquement pas sensibles.

La figure 3c illustre de manière analogue la disposition d'électrodes (6,7) "découpées" dans une couche (8) revêtant l'ensemble du vitrage.

Les figures 3a, 3b 4, 5, 6 et 7 représentent des modes de réalisation particulièrement avantageux. Dans ces modes de réalisation les électrodes sont formées sur un film transparent non-conducteur (15) d'un matériau compatible avec les composants avec lesquels il est en contact, essentiellement la feuille de verre (10), et l'intercalaire d'assemblage (11). Un matériau bien connu pour ce type d'application est le polytéréphtalate d'éthylène glycol (PET) qui présente l'avantage d'être extrêmement résistant même sous de très faibles épaisseurs. Ce matériau présente encore la particularité de ne pas se prêter facilement à l'étirage. Pour cette raison il n'est généralement pas utilisé dans les vitrages comportant des courbures de type sphérique, lorsque le but est de constituer un filtre infrarouge. Dans les cas représentés la surface des électrodes restant de dimensions limitées, les courbures sont pratiquement sans incidence sur l'insertion de ce film support (15).

L'utilisation de cet élément support des électrodes offre plusieurs avantages. Il ne nécessite pas de devoir procéder à la formation d'une couche conductrice sur une grande surface si une telle couche n'est pas requise pour d'autres fonctions. L'insertion du support (15) intervient au stade de l'assemblage du feuilleté, alors que les traitements ultérieurs ne comportent plus l'exposition à des températures très élevées. L'assemblage dans les conditions traditionnelles est effectué à l'étuve à une température de l'ordre de 150°C.

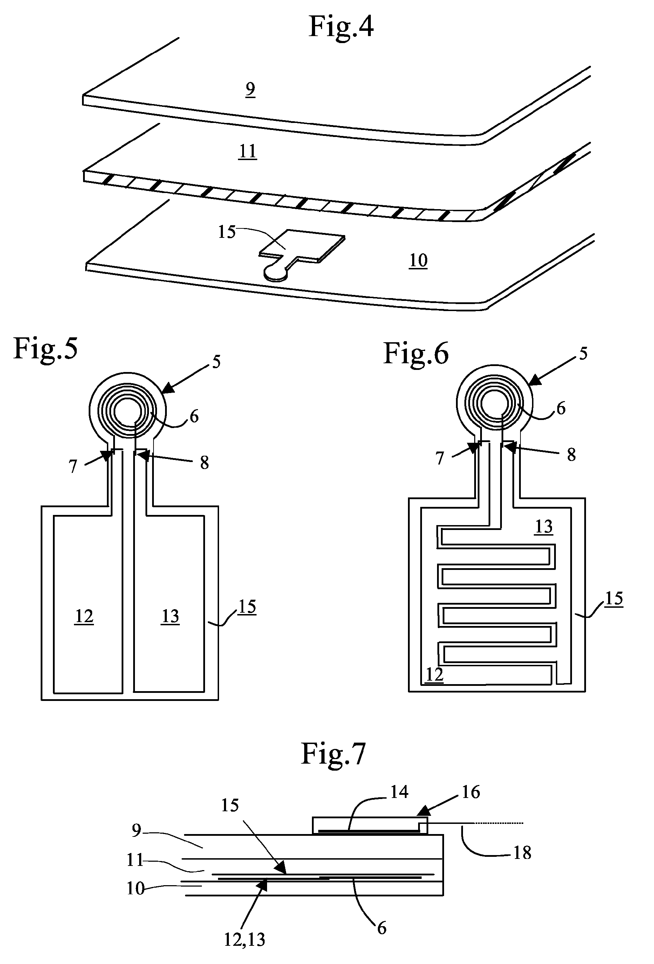

Le film de PET n'adhère pas au verre par lui-même. Si nécessaire une poudre de PVB ou tout autre adhésif approprié connu peut être disposé sur la face au contact du verre dans les formes représentées aux figures 3a, 4et 7. Cependant les petites dimensions de ce support (15), et le fait qu'il puisse être entouré complètement de zones sur lesquelles l'intercalaire est bien collé aux deux feuilles de verre, fait que la présence de ces adhésifs n'est pas systématiquement nécessaire. Dans le mode représenté à la figure 3b, le support (15) du détecteur est disposé entre deux feuilles intercalaires (11a) et (11b). Ce mode conduit à un assemblage présentant toutes les caractéristiques de résistance qui sont celles des vitrages feuilletés traditionnels dans la mesure où l'adhérence aux feuilles de verre s'effectue directement avec les intercalaires.

Le dépôt des couches conductrices est avantageusement réalisé sur un film support (15) de dimensions bien supérieures à celles du capteur seul pour utiliser au mieux les installations de dépôt. Une multiplicité de détecteurs peut être déposée simultanément. Ils sont ensuite individualisés par découpe du film ainsi revêtu.

La mise en place du circuit induit est effectué dans ce cas de préférence également sur le support (15). Le collage du circuit sur le support et la jonction de ce circuit induit avec les électrodes du détecteur précèdent l'insertion de l'ensemble entre les feuilles de verre(9,10) et l'assemblage final des feuilles de verre, de l'insert (15) et de l'intercalaire (11). La figure 4 montre les différents constituants dans l'ordre de superposition précédant leur assemblage.

La figure 5 représente de manière schématique un détecteur selon l'invention comprenant deux électrodes (12,13), essentiellement transparentes, sur un support (15), chacune en contact avec une extrémité (7,8) du circuit induit (5) constitué par un fil métallique (6) enroulé en spirale. Le choix d'une spirale à spires jointives ou non présente l'avantage de minimiser l'épaisseur de ce circuit ce qui est préférable compte tenu du fait qu'il ne doit pas créer de risque de délamination dans l'ensemble feuilleté. Le circuit peut bien entendu revêtir d'autres formes, notamment celle d'une bobine plate, pour autant que l'épaisseur reste dans les limites compatibles avec l'insertion dans le feuilleté.

La figure 7 présente une disposition d'un détecteur tel que présenté à la figure 5, dans un vitrage feuilleté. Pour la compréhension les éléments du détecteur sont montrés légèrement distants les uns des autres. Il va de soi qu'en réalité ils sont plaqués les uns contre les autres. L'intercalaire (11) presse les éléments du détecteur contre la feuille de verre (10). Le détecteur dans le feuilleté est présenté sur la face la plus proche des gouttes de pluie, pour les raisons indiquées précédemment.

Le détecteur est disposé sur une feuille support (15). Il comprend les électrodes (12,13) et le fil (6) constituant le circuit induit. Le contact entre la couche constituant les électrodes et le fil du circuit induit est réalisé avec recouvrement limité pour garantir un bon contact. Une colle conductrice ou une soudure peut encore garantir un meilleur contact.

Le fil constituant le circuit induit peut être gainé d'un film de matériau isolant. Cette disposition permet d'éviter les courts-circuits entre les spires, si celles-ci entrent en contact les unes avec les autres. La présence de cette gaine isolante est notamment utile dans le cas présenté à la figure 5. Le fil du circuit de la spire centrale doit nécessairement se prolonger par dessus les spires précédentes pour rejoindre l'extrémité (8) en contact avec la couche conductrice constituant l'électrode (13). Si le fil n'est pas gainé, il convient d'interposer un élément isolant à l'emplacement où cette extrémité croise les différentes spires.

La figure 7 présente encore le circuit inducteur (14) qui est disposé en regard du circuit induit (6). Le circuit inducteur peut être constitué comme le circuit induit sous forme d'un fil enroulé en spirales. Il peut aussi prendre la forme d'une bobine plate ou toute autre forme dans la mesure où cet inducteur étant disposé à l'extérieur du vitrage, les contraintes d'épaisseur du circuit induit ne se retrouvent pas.

Le circuit inducteur est disposé sur la face intérieure du vitrage. La fixation est effectuée par tout moyen approprié. Ce circuit peut être encapsulé dans un revêtement isolant. Il est aussi possible de constituer un boîtier collé sur la face du vitrage. Le circuit inducteur (14) est avantageusement couplé aux moyens d'analyse de façon à limiter le plus possible le bruit de fond dont les conducteurs sont à l'origine. L'alimentation du circuit inducteur est obtenue au moyen de conducteurs (18) reliés au circuit d'ensemble du véhicule.

La figure 6 présente un détecteur selon l'invention dans lequel le dessin des électrodes (12, 13) vise à accroître leur sensibilité. A cet effet la surface située entre les électrodes est accrue par un dessin en dents de peigne. Ce dessin permet d'accroître la surface sensible en maintenant les dimensions de l'ensemble, aussi .petites que possible

Les dessins des électrodes présentés ci-dessus à titre d'exemple ne sont bien évidemment pas limitatifs. De même ces dessins sont utilisables que les électrodes soient sur un film support ou que ces mêmes électrodes soient formées directement sur une feuille de verre.

## Revendications

1. Vitrage feuilleté pourvu d'un détecteur de pluie capacitif situé entre les feuilles constituant le vitrage, détecteur dont les électrodes formant capacité sont constituées d'un matériau conducteur de faible épaisseur, essentiellement transparent à ces épaisseurs, les électrodes étant alimentées par un circuit induit, associé à un circuit inducteur disposé sur une face extérieure du vitrage.

2. Vitrage feuilleté selon la revendication 1 dans lequel les électrodes présentent une transmission lumineuse dans le visible qui n'est pas inférieure à 60% et de préférence pas inférieure à 65%.

3. Vitrage selon l'une des revendications précédentes dans lequel la surface des électrodes est comprise entre 0,0004 et 0,04m².

4. Vitrage selon l'une des revendications précédentes dans lequel les électrodes sont constituées par un ensemble de couches minces comprenant une couche métallique, ensemble formé par dépôt sous-vide.

5. Vitrage selon l'une des revendications 1 à 3 dans lequel les électrodes sont constituées d'au moins une couche d'un oxyde conducteur.

6. Vitrage selon l'une des revendications précédentes dans lequel les électrodes sont individualisées par une découpe appropriée d'une couche revêtant l'ensemble de la surface du vitrage.

7. Vitrage selon l'une des revendications 1 à 3 dans lequel les électrodes sont constituées par une méthode d'impression sur un des constituants du vitrage.

8. Vitrage selon l'une des revendications 1 à 3 dans lequel les électrodes sont constituées par un matériau polymère conducteur.

9. Vitrage selon l'une des revendications précédentes dans lequel le matériau conducteur dont sont constituées les électrodes constitue également les conducteurs associés à ces électrodes et reliant celles-ci au circuit induit.

10. Vitrage selon l'une des revendications précédentes dans lequel le circuit induit est constitué d'un fil conducteur métallique.

11. Vitrage selon la revendication 10 dans lequel le fil du circuit induit est enroulé en bobine plate ou en spirale.

12. Vitrage selon l'une des revendications 10 ou 11 dans lequel le fil du circuit induit est gainé d'un film de matériau isolant.

13. Vitrage selon l'une des revendications précédentes dans lequel le détecteur est supporté par un film mince essentiellement transparent, film inséré dans l'assemblage feuilleté.

14. Vitrage selon la revendication 13 dans lequel les dimensions du film support sont essentiellement celles du détecteur.

15. Vitrage selon l'une des revendications 13 ou 14, dans lequel le film support des électrodes est un film PET.

16. Vitrage selon l'une des revendications 13 à 15 dans lequel le film support est disposé entre deux feuilles intercalaires d'assemblage du feuilleté.

17. Vitrage selon la revendications 13 à 15 dans lequel le film support des électrodes est disposé entre une feuille de verre et la feuille intercalaire d'assemblage du feuilleté.
